# FASCICULE DE BREVET EUROPEEN

(11) **EP 1 546 270 B1**
(45) Date de publication et mention de la délivrance du brevet: **20.06.2007**
(21) Numéro de dépôt: 03773793.9
(22) Date de dépôt: 19.09.2003
(51) Int. Cl.: C09D 5/25, C09D 179/08, H01B 3/30

(54) **PROCEDE DE FABRICATION D'UN DIISOCYANATE MODIFIE, PROCEDE DE FABRICATION D'UN VERNIS D'EMAILLAGE AUTOLUBRIFIANT, PROCEDE DE FABRICATION D'UN CONDUCTEUR ELECTRIQUE EMAILLE**
VERFAHREN ZUR HERSTELLUNG EINES MODIFIZIERTEN DIISOCYANATS, VERFAHREN ZUR HERSTELLUNG EINES SELBSTSCHMIERENDEN EMAILLELACKES, VERFAHREN ZUR HERSTELLUNG EINES LACKISOLIERTEN ELEKTRISCHEN LEITERS
METHOD OF PRODUCING A MODIFIED DIISOCYANATE, METHOD OF PRODUCING A SELF-LUBRICATING ENAMELLING VARNISH AND METHOD OF PRODUCING AN ENAMELLED ELECTRICAL CONDUCTOR

(30) Priorité: 20.09.2002 FR 0211643
(43) Date de publication de la demande: 29.06.2005
(73) Titulaire: Essex Nexans Europe, 60200 Compiègne (FR)
(72) Inventeur: STUDER, Virgine, F-69680 Chassieu (FR); SCHILDKNECHT, Laurent, F-69003 Lyon (FR); PIECHACZYK, Arnaud, F-69006 Lyon (FR)
(74) Mandataire: Feray, Valérie
(86) Numéro de dépôt international: PCT/FR2003/002767
(87) Numéro de publication internationale: WO 2004/026974

(56) Documents cités:
- EP-A- 0 072 178
- WO-A-97/31046
- PATENT ABSTRACTS OF JAPAN vol. 0153, no. 13 (C-0857), 9 août 1991 (1991-08-09) & JP 3 115477 A (SHOWA ELECTRIC WIRE & CABLE CO LTD; others: 01), 16 mai 1991 (1991-05-16)

## Description

La présente invention concerne un procédé de fabrication d'un diisocyanate modifié, un procédé de fabrication d'un vernis d'émaillage autolubrifiant et un procédé de fabrication d'un conducteur électrique émaillé.

Dans la fabrication des moteurs électriques, plus on peut incorporer une grande quantité de fil de bobinage dans le coeur du stator, plus les performances du moteur sont bonnes. En outre, les fabricants de moteurs souhaitent également accroître le rendement de fabrication. Ainsi, de manière connue, ces bobinages sont introduits de manière automatique dans les stators.

Les fils utilisés dans ces moteurs électriques sont typiquement constitués d'un conducteur électrique revêtu d'une ou de plusieurs couches d'isolation à base de vernis d'émaillage.

Ces fils émaillés sont bobinés à très grandes vitesses, et sont donc soumis à des frottements et des contraintes mécaniques importants qui peuvent endommager leur isolation et conduire à un enroulement irrégulier.

Pour résoudre ce problème, il est connu d'après le document EP 0072178 de réaliser l'isolation extérieure de ces fils de bobinages au moyen d'un vernis d'émaillage ayant un faible coefficient de frottement assurant les propriétés de glissement recherchées.

Ce vernis, que l'on peut désigner sous le terme de vernis autolubrifiant, est composé d'un polymère de type polyamide-imide polyester ou polyester imide, suivant les exemples, polymère modifié en ce qu'il comporte en terminaison un groupement alkyle ayant une chaîne linéaire de 21 à 31 atomes de carbone, suivant les exemples.

Le polymère modifié est obtenu par mélange, en milieu solvant de type N-méthyl pyrrolione (NMP), d'acide aliphatique tel que l'acide docosanoïque ou tel que la cire de Montan ou d'alkyle ester avec les monomères utilisés pour la formation de polymères tels que l'anhydride trimellitique et du diisocyanate.

Le polymère modifié est également obtenu par mélange, en milieu solvant de type xylène, d'alkyle ester tel que le béhénate de méthyle avec les monomères utilisés pour la formation de polymères tels que du téréphthalate de diméthyle, de l'éthylène glycol et du glycérol.

Cependant, d'après les tests d'abrasion présentés, ce vernis autolubrifiant appliqué sur un fil conducteur est peu recouvrable. Du fait de ce problème d'adhérence, le vernis ne peut être appliqué en plusieurs passes sous peine de dégrader les propriétés mécaniques du fil conducteur émaillé.

En outre, la tenue au solvant ou à un réfrigérant tel que du fréon du fil émaillé recouvert d'un tel vernis, autrement dit sa compatibilité chimique, n'est pas testée. De même que les propriétés thermiques (thermoplasticité...), les propriétés d'isolation (tangente de l'angle de pertes) et la stabilité ne sont pas garanties.

Par ailleurs, le document JP5101713 propose un vernis d'émaillage autolubrifiant comportant un polyamide imide modifié sur lequel est fixée une chaîne aliphatique pendante ayant plus de 17 atomes de carbone.

La chaîne est pendante car fixée par un seul de ses bouts sur le polyamide imide pour former une ramification.

La ou les chaînes pendantes confèrent les propriétés de glissement recherchées au vernis d'émaillage. Cependant, les propriétés mécaniques, thermiques et d'isolation électrique des vernis obtenus ne sont pas présentées.

Le procédé de fabrication de ce vernis comprend la synthèse d'un dérivé réactif lubrifiant et ensuite la synthèse du polyamide-imide.

La synthèse d'un dérivé réactif lubrifiant est obtenue par la réaction d'un composé ayant au moins trois groupes réactifs hydroxyles et/ou carboxyles avec un autre composé ayant un groupe lubrifiant et un groupe qui réagit avec l'un deces groupes réactifs.

Ce document décrit plus précisément, dans les exemples détaillés, ces autres composés qui ont un groupe lubrifiant et également un groupe réactif isocyanate, Ces autres composés sont obtenus après une réaction entre un diisocyanate et un acide montanique ou stéarique.

L'obtention du dérivé réactif lubrifiant passe donc d'abord par la formation de ces autres composés et, en outre, nécessite des opérations de filtrage et de cristallisation, donnant un procédé de fabrication du polyamide-imide modifié, et donc du vernis, lent et compliqué.

Le document WO 97/310046 propose un triisocyanate modifié par un composant ayant une chaîne pendante aliphatique comptant plus de 15 atomes de carbone dans un procédé sans solvant.

Le but de la présente invention est donc de mettre au point, à partir d'un procédé de fabrication compatible avec les exigences industrielles, un vernis d'émaillage autolubrifiant, stable, facilement applicable comme revêtement et recouvrable, ayant ainsi les propriétés mécaniques, thermiques et d'isolation électrique comparables aux vernis classiques non lubrifiés ainsi qu'un faible coefficient de frottement.

La présente invention propose à cet effet un procédé de fabrication d'un diisocyanate modifié sur lequel est fixée une chaîne pendante aliphatique comportant au moins 15 atomes de carbone, le diisocyanate modifié étant obtenu par la réaction entre un groupement fonctionnel isocyanate d'un triisocyanate et un groupement fonctionnel terminal d'une chaîne aliphatique.

Le procédé selon l'invention permet l'obtention d'un diisocyanate modifié en une seule et simple étape.

Le triisocyanate selon l'invention est particulièrement réactif et permet donc une réaction totale garantissant des propriétés souhaitées précitées pour le polymère final.

Naturellement, la réaction intervient en l'absence de monomère difonctionnel (ou en quantité négligeable).

Avantageusement, ladite fabrication du diisocyanate modifié peut être réalisée en milieu solvant (par exemple solvant apte à bloquer deux des trois fonctions isocyanates), agité et chauffé.

Selon une caractéristique, ledit groupement fonctionnel terminal est choisi parmi les alcools, les anhydrides, les acides carboxyliques et les amines.

La présente invention propose également un procédé de fabrication d'un vernis d'émaillage autolubrifiant comportant un polymère modifié comprenant un polymère dit de base sur lequel est fixée une chaîne aliphatique pendante comportant au moins 15 atomes de carbone caractérisé en ce qu'il comporte les étapes suivantes :
- la fabrication d'un diisocyanate modifié telle que définie précédemment,
- le mélange dudit diisocyanate modifié avec au moins un monomère difonctionnalisé comportant deux groupements fonctionnels réactifs avec lesdits groupements fonctionnels isocyanates du diisocyanate modifié pour réaliser ladite synthèse dudit polymère modifié.

Ainsi, la fabrication d'un vernis d'émaillage autolubrifiant est simplifié grâce au procédé selon l'invention.

Le diisocyanate modifié selon l'invention ne risque pas d'empêcher la formation d'une longue chaîne principale polymère par polycondensation et donc de limiter les performances du vernis d'émaillage autolubrifiant.

En outre, le triisocyanate rend possible la fabrication d'une large gamme de polymères.

Ainsi, ledit polymère de base peut être un polyamide-imide ou bien peut être choisi parmi les polyuréthanes, les polyamides, les polyesters, les polyesters-imides, les polyesters-imides étamables, les polyesters amides-imides, les polyimides, les composés polyépoxydes et les composés polyphénoxydes.

Le polymère de base peut en outre être un polyamide semi aromatique et le groupement, dit de fixation, fixant le polymère de base et ladite chaîne aliphatique pendante peut être un uréthane ou un amide de sorte que ledit vernis d'émaillage autolubrifiant est thermoadhérent.

Un tel vernis peut être utilisé pour les applications de résistance élevée aux décharges partielles.

Avantageusement, lorsque le polymère de base est un polyuréthane, le procédé peut comporter en outre une étape de mélange du polyuréthane modifié avec un polymère choisi parmi un polyester-imide étamable et un polyester-imide étamable modifié.

Un monomère difonctionalisé comprenant deux groupements fonctionnels semblables aux groupements fonctionnels isocyanates du diisocyanate modifié peut être mélangé audit diisocyanate modifié.

L'invention propose enfin un procédé de fabrication d'un conducteur électrique émaillé caractérisé en qu'il comporte les étapes suivantes :
- une étape de fabrication du vernis d'émaillage autolubrifiant telle que définie précédemment,
- une étape de revêtement d'un conducteur électrique avec une couche du vernis d'émaillage autolubrifiant.

D'autres caractéristiques et avantages de la présente invention apparaîtront dans la description suivante de plusieurs exemples de vernis d'émaillage selon l'invention d'un conducteur électrique revêtu d'une couche de vernis d'émaillage autolubrifiant selon l'invention et du procédé de fabrication du vernis d'émaillage autolubrifiant selon l'invention incluant la fabrication du diisocyanate modifié, donnés à titre illustratif et nullement limitatif.

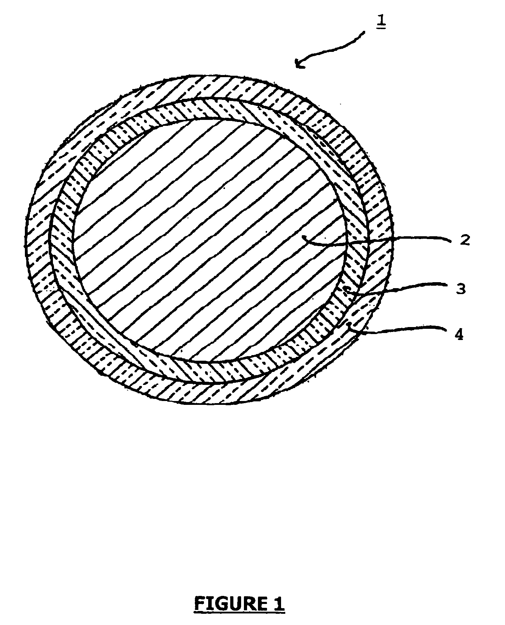

La figure 1 montre une vue en coupe transversale d'un conducteur fabriqué à partir du procédé selon l'invention.

Le conducteur 1 comprend une âme électriquement conductrice 2, en cuivre par exemple, revêtue d'une couche de vernis 3 en un vernis d'émaillage classique, elle-même revêtue d'une couche de vernis d'émaillage autolubrifiant 4 obtenu selon l'un des exemples 1 à 8 ci-dessous, selon l'invention réalisée en deux passes. Le nombre de passes n'est pas limité et dépend de l'utilisation finale du fil et des caractéristiques recherchées. La couche 4 de vernis selon l'invention est toujours la couche extérieure de revêtement du conducteur 1, puisqu'elle assure les propriétés de glissement.

Le conducteur 1 peut bien entendu comprendre une ou plusieurs autres couches de vernis (non représentées) autres que la couche 3 sous la couche de vernis 4 selon l'invention et également être directement recouvert de la seule couche de vernis 4 selon l'invention.

### Exemple 1

Dans cet exemple 1, est décrit le procédé de fabrication d'un vernis d'émaillage autolubrifiant de type polyamide-imide modifié comportant le polymère de base polyamide-imide sur lequel sont fixées des chaînes aliphatiques pendantes comportant chacune 18 atomes de carbones. Le groupement, dit de fixation, fixant ce polymère de base et chaque chaîne aliphatique pendante est un uréthane.

696 g de N-méthyl pyrrolione (NMP), 204 g d'isocyanurate du HDI (Lyondell Luxate HT2000 ou Bayer Desmodur N3300) puis 95 g d'octadécanol sont introduits dans un réacteur chauffé et agité surmonté d'un réfrigérant. Le mélange est chauffé et agité à 100°C pendant 1 heure. La fonction alcool de l'octadécanol réagit sur l'une des fonctions isocyanates du triisocyanate pour former un diisocyanate modifié sur lequel la chaîne aliphatique est fixée par le groupement de fixation uréthane.

Le diisocyanate modifié ainsi formé est ensuite introduit dans un réacteur pour la synthèse du polyamide-imide en remplacement d'une part variable des diisocyanates (MDI, TDI...) et réagit de la même manière avec les diacides et anhydrides présents dans le milieu. Cette synthèse est tout à fait classique et bien connue de l'homme du métier. Elle ne sera donc pas décrite plus en détail ici.

Le nombre de fonctions isocyanate dans le milieu est sensiblement égal au nombre de fonctions acide carboxylique. Dans cet exemple 1, le diisocyanate modifié remplace une partie du MDI pour obtenir un vernis d'émaillage autolubrifiant limpide et stable de 31% d'extrait sec ayant une viscosité de 1700 mPa.s à 20°C.

### Exemple 2

Dans cet exemple 2, est décrit le procédé de fabrication d'un vernis d'émaillage autolubrifiant de type polyamide-imide modifié comportant le polymère de base polyamide-imide sur lequel sont fixées des chaînes aliphatiques pendantes comportant chacune 18 atomes de carbones. Le groupement, dit de fixation, fixant ce polymère de base et chaque chaîne aliphatique pendante est une amide.

349 g de N-méthyl pyrrolione (NMP), 110 g d'isocyanurate du HDI (Lyondell Luxate HT2000 ou Bayer Desmodur N3300) puis 54 g d'acide stéarique (Akzo Nobel Kortacid 1895 par exemple) sont introduits dans un réacteur chauffé et agité surmonté d'un réfrigérant. Le mélange est chauffé et agité à 150°C pendant 1 heure. La fonction acide carboxylique réagit sur l'une des fonctions isocyanate du triisocyanate pour former un diisocyanate modifié sur lequel la chaîne aliphatique est fixée par le groupement de fixation amide.

Ce diisocyanate modifié ainsi formé est ensuite introduit dans la synthèse du polyamide-imide en remplacement d'une part variable des diisocyanates (MDI, TDI...) et réagit de la même manière avec les diacides et anhydrides présents dans le milieu. Cette synthèse est tout à fait classique et bien connue de l'homme du métier. Elle ne sera donc pas décrite plus en détail ici.

Le nombre de fonctions isocyanate dans le milieu est sensiblement égal au nombre de fonctions acide carboxylique. Dans cet exemple 2, le diisocyanate modifié remplace une partie du MDI pour obtenir un vernis d'émaillage autolubrifiant limpide et stable de 30% d'extrait sec ayant une viscosité de 1400 mPa.s à 20°C.

### Exemple 3

Dans cet exemple 3, est décrit le procédé de fabrication d'un vernis d'émaillage autolubrifiant et thermoadhérent de type polyamide semi aromatique modifié comportant le polymère de base polyamide semi aromatique sur lequel sont fixées des chaînes aliphatiques pendantes comportant chacune 18 atomes de carbones.

Le groupement, dit de fixation, fixant ce polymère de base et chaque chaîne aliphatique pendante est un uréthane.

430 g de N-méthyl pyrrolione (NMP), 125 g d'isocyanurate du HDI (Lyondell Luxate HT2000 ou Bayer Desmodur N3300) puis 59 g d'octadécanol sont introduits dans un réacteur chauffé et agité surmonté d'un réfrigérant. Le mélange est chauffé et agité à 100°C pendant 1 heure. La fonction alcool réagit sur l'une des fonctions isocyanate du triisocyanate pour former un diisocyanate sur lequel la chaîne aliphatique est fixé par le groupement de fixation uréthane. Ce diisocyanate ainsi formé sera ensuite introduit dans la synthèse du polyamide en remplacement d'une part variable des diisocyanates (MDI, TDI...) et réagira de la même manière avec les diacides carboxyliques présents dans le milieu. Cette synthèse est tout à fait classique et bien connue de l'homme du métier. Elle ne sera donc pas décrite plus en détail ici. On pourra se référer pour cela par exemple au document US 4505978.

Le nombre de fonctions isocyanate dans le milieu est sensiblement égal au nombre de fonctions acide carboxylique.

Dans cet exemple 3, le diisocyanate modifié remplace une partie du MDI pour obtenir un vernis d'émaillage autolubrifiant et thermoadhérent limpide et stable de 25% d'extrait sec ayant une viscosité de 2000 mPa.s à 20°C. Le rapport (masse de chaîne aliphatique)/(masse base du polymère) est égal à 6,7%.

### Exemple 4

Dans cet exemple 4, est décrit le procédé de fabrication d'un vernis d'émaillage autolubrifiant de type polyester-imide étamable modifié comportant le polymère de base polyester-imide étamable donc sans THEIC (Tris-hydroxyéthylisocyanurate) sur lequel sont fixées des chaînes aliphatiques pendantes comportant chacune 28 atomes de carbones. Le groupement, dit de fixation, fixant ce polymère de base et chaque chaîne aliphatique pendante est une amide.

900 g de N-méthyl pyrrolidone (NMP), 229,4 g d'isocyanurate du HDI (Lyondell Luxate HT2000 ou Bayer Desmodur N3300) puis 177 g d'acide montanique sont introduits dans un réacteur chauffé et agité surmonté d'un réfrigérant. Le mélange est chauffé et agité à 150°C pendant 1 heure. La fonction acide carboxylique réagit sur l'une des fonctions isocyanate du triisocyanate pour former un diisocyanate modifié sur lequel la chaîne aliphatique est fixée par le groupement de fixation amide.

Ce diisocyanate modifié ainsi formé est ensuite introduit dès la première phase de la synthèse tout à fait classique du polyester-imide en remplacement d'une part variable des diisocyanates (MDI) et réagit de la même manière avec les anhydrides présents dans le milieu (formation des groupements imide). La seconde phase de cette synthèse est tout à fait classique et bien connue de l'homme du métier. Elle ne sera donc pas décrite plus en détail ici.

Le nombre de fonctions isocyanate dans le milieu est sensiblement égal au nombre de fonctions anhydride. Dans cet exemple 4, le diisocyanate modifié remplace une partie du MDI pour obtenir un vernis d'émaillage autolubrifiant limpide et stable de 44% d'extrait sec ayant une viscosité de 2300 mPa.s à 20°C.

### Exemple 5

Dans cet exemple 5, est décrit le procédé de fabrication d'un vernis d'émaillage autolubrifiant de type polyester-imide étamable modifié comportant le polymère de base polyester-imide sans THEIC sur lequel sont fixées des chaînes aliphatiques pendantes comportant chacune 28 atomes de carbones. Le groupement, dit de fixation, fixant ce polymère de base et chaque chaîne aliphatique pendante est une amide.

700 g de Crésol, 229,4 g d'isocyanurate du HDI (Lyondell Luxate HT2000 ou Bayer Desmodur N3300) puis 177 g d'acide montanique sont introduits dans un réacteur chauffé et agité surmonté d'un réfrigérant. Le mélange est chauffé et agité à 200°C pendant 1 heure. La fonction acide carboxylique réagit sur l'une des fonctions isocyanate du triisocyanate pour former un diisocyanate modifié sur lequel la chaîne aliphatique est fixée par le groupement de fixation amide.

Ce diisocyanate modifié ainsi formé est ensuite introduit dès la première phase de la synthèse tout à fait classique du polyester-imide en remplacement d'une part variable des diisocyanates (MDI) et réagit de la même manière avec les anhydrides présents dans le milieu (formation des groupements imide). La seconde phase de cette synthèse est tout à fait classique et bien connue de l'homme du métier. Elle ne sera donc pas décrite plus en détail ici.

Le nombre de fonctions isocyanate dans le milieu est sensiblement égal au nombre de fonctions anhydride. Dans cet exemple 5, le diisocyanate modifié remplace une partie du MDI pour obtenir un vernis d'émaillage autolubrifiant limpide et stable de 44% d'extrait sec ayant une viscosité de 1850 mPa.s à 20°C.

### Exemple 6

Dans cet exemple 6, est décrit le procédé de fabrication d'un vernis d'émaillage autolubrifiant de type polyester-imide THEIC modifié comportant le polymère de base polyester-imide, contenant du THEIC, sur lequel sont fixées des chaînes aliphatiques pendantes comportant chacune 28 atomes de carbones. Le groupement, dit de fixation, fixant ce polymère de base et chaque chaîne aliphatique pendante est une amide.

700 g de Crésol, 229,4 g d'isocyanurate du HDI (Lyondell Luxate HT2000 ou Bayer Desmodur N3300) puis 177 g d'acide montanique sont introduits dans un réacteur chauffé et agité surmonté d'un réfrigérant. Le mélange est chauffé et agité à 200°C pendant 1 heure. La fonction acide carboxylique réagit sur l'une des fonctions isocyanate du triisocyanate pour former un diisocyanate modifié sur lequel la chaîne aliphatique est fixée par le groupement de fixation amide.

Ce diisocyanate modifié ainsi formé est ensuite introduit dès la première phase de la synthèse tout à fait classique du polyester-imide en remplacement d'une part variable des diisocyanates (MDI) et réagit de la même manière avec les anhydrides présents dans le milieu (formation des groupement imide). La seconde phase de cette synthèse est tout à fait classique et bien connue de l'homme du métier. Elle ne sera donc pas décrite plus en détail ici.

Le nombre de fonctions isocyanate dans le milieu est sensiblement égal au nombre de fonctions anhydride. Dans cet exemple 6, le diisocyanate modifié remplace une partie du MDI pour obtenir un vernis d'émaillage autolubrifiant limpide et stable de 43% d'extrait sec ayant une viscosité de 2050 mPa.s à 20°C.

### Exemple 7

Dans cet exemple 7, est décrit le procédé de fabrication d'un vernis d'émaillage autolubrifiant de type polyuréthane modifié comportant le polymère de base polyuréthane sur lequel sont fixées des chaînes aliphatiques pendantes comportant chacune 28 atomes de carbones, mélangé avec un polyester-imide ne contenant pas de THEIC. Le groupement, dit de fixation, fixant ce polymère de base et chaque chaîne aliphatique pendante est une amide.

264 g de Cresol, 67,4 g d'isocyanurate du HDI (Lyondell. Luxate HT2000 ou Bayer Desmodur N3300) puis 52 g d'acide montanique sont introduits dans un réacteur chauffé et agité surmonté d'un réfrigérant. Le mélange est chauffé et agité à 200°C pendant 1 heure. La fonction acide carboxylique réagit sur l'une des fonctions isocyanate du triisocyanate pour former un diisocyanate modifié sur lequel la chaîne aliphatique est fixée par le groupement de fixation amide.

Ce diisocyanate modifié ainsi formé est ensuite introduit dans la synthèse du polyuréthane - plus précisément polyuréthane-polyisocyanate bloqué - en remplacement d'une part variable des diisocyanates (MDI) et réagit de la même manière avec les polyols présents dans le milieu (formation des groupements uréthane). Cette synthèse est tout à fait classique et bien connue de l'homme du métier. Elle ne sera donc pas décrite plus en détail ici.

Le nombre de fonctions isocyanate dans le milieu est sensiblement égal au double du nombre de fonctions hydroxyle des polyols, les fonctions isocyanates libres étant bloquées par du crésol polyuréthane

Le polyuréthane-polyisocyanate bloqué est mélangé à un ratio base/base 60/40 avec un polyester-imide ne contenant pas de THEIC puis formulé. Le vernis d'émaillage autolubrifiant obtenu est un polyuréthane de classe H, de 40 % d'extrait sec ayant une viscosité de 1800 mPa.s à 20°C.

### Exemple 8

Dans cet exemple 8, est décrit le procédé de fabrication d'un vernis d'émaillage autolubrifiant de type polyuréthane modifié comportant le polymère de base polyuréthane sur lequel sont fixées des chaînes aliphatiques pendantes comportant chacune 28 atomes de carbones mélangé au polymère de l'exemple 5. Le groupement, dit de fixation, fixant ce polymère de base et chaque chaîne aliphatique pendante est une amide.

Un polyuréthane-polyisocyanate bloqué, obtenu comme dans l'exemple 7, est mélangé à un ratio base/base 60/40 avec le polyester-imide décrit dans l'exemple 5 puis formulé. Le vernis d'émaillage autolubrifiant obtenu est un polyuréthane de classe H, de 44 % d'extrait sec ayant une viscosité de 4500 mPa.s à 20°C.

Le tableau 1 ci-après donne les propriétés et résultats de tests de fils de cuivre, de diamètre égal à environ 0,56 mm, qui ont été émaillés sans ajout de lubrifiant externe, dans les conditions suivantes :
- vitesse d'émaillage : 100 m/min,
- 12 passes de vernis classique polyester-imide THEIC (19960 Nexans IVA) utilisé comme sous-couche,
- 2 passes de vernis autolubrifiants définis dans les exemples précédents 1 et 2.

A titre comparatif, les résultats obtenus avec un vernis classique non lubrifiant de type polyamide imide sont également présentés.

Comme recherché, les propriétés mécaniques, thermiques et d'isolation des vernis autolubrifiants des exemples 1 et 2 sont analogues à celle du vernis classique non lubrifiant. En particulier, la résistance à l'abrasion est satisfaisante et les propriétés de glissement améliorées.

Le tableau 2 ci-après donne les propriétés et résultats de tests de fils de cuivre, de diamètre égal à environ 0,50 mm, qui ont été émaillés sans ajout de lubrifiant externe, dans les conditions suivantes :
- vitesse d'émaillage : 50 m/min,
- 6 passes de vernis classique polyester-imide THEIC (19960 Nexans IVA), dans un premier four à 540°C utilisé comme sous-couche,
- 2 passes du vernis autolubrifiant thermoadhéraent défini dans l'exemple 3, dans un second four à 360°C en surcouche.

A titre comparatif, les résultats obtenus avec un vernis thermoadhérent classique non lubrifiant de type polyamide semi aromatique sont également présentés dans le tableau 2.

Le tableau 3 ci-après donne les propriétés et résultats de tests de fils de cuivre, de diamètre égal à environ 0,56 mm, qui ont été émaillés sans ajout de lubrifiant externe, dans les conditions suivantes:
- vitesse d'émaillage : 100 m/min,
- 12 passes de vernis autolubrifiants définis dans les exemples précédents 4 à 6.

A titre comparatif, les résultats obtenus avec un vernis classique non lubrifiant dit A de type polyester-imide étamable (19828 Nexans) et un vernis classique non lubrifiant polyester-imide THEIC dit B (19960 Nexans) sont également présentés.

Comme recherché, les propriétés mécaniques, thermiques et d'isolation des vernis autolubrifiants des exemples 4 à 6 sont analogues à celles des vernis classiques non lubrifiants A, B. En particulier, la résistance à l'abrasion est satisfaisante et les propriétés de glissement améliorées.

Le tableau 4 ci-après donne les propriétés et résultats de tests de fils de cuivre, de diamètre égal à environ 0,56 mm, qui ont été émaillés sans ajout de lubrifiant externe, dans les conditions suivantes:
- vitesse d'émaillage : 134 m/min,
- 12 passes de vernis autolubrifiants définis dans les exemples précédents 7 et 8.

A titre comparatif, les résultats obtenus avec un vernis classique non lubrifiant dit C qui est un polyuréthane de classe H (13090 Nexans) sont également présentés dans le tableau 4. Comme recherché, les propriétés mécaniques, thermiques et d'isolation des vernis autolubrifiants des exemples sont analogues à celle du vernis classique C. Bien entendu, la présente invention n'est pas limitée aux modes de réalisation qui viennent d'être décrits.

Enfin, on pourra remplacer tout moyen par un moyen équivalent sans sortir du cadre de la présente invention.

**Tableau 1**

| | Exemple 1 | Exemple 2 | Vernis Standard |
|---|---|---|---|
| Nombre d'atomes de carbone par chaîne aliphatique | 18 | 18 | - |
| Surépaisseur d'émail (µm) | 49 | 48 | 49 |
| Résistance à l'abrasion | 550 | 530 | 620 |
| Thermoplasticité | 475°C | 470°C | 470°C |
| Glissement torsade (CEI60851-3-B5) | 10N | 12N | 65N (allongement du fil) |
| Résistance au Fréon R22 72h, 70°C, 30 bars | OUI | OUI | OUI |

**Tableau 2**

| | Exemple 3 | Vernis standard |
|---|---|---|
| Nombre d'atomes de carbone par chaîne aliphatique | 18 | - |
| Surépaisseur d'émail thermoadhérent (µm) | 19 | 20 |
| Forces de collage à 20°C (collage 30min à 200°C CEI851-7) | 2,13N | 2,2N |
| Température de ramollissement (collage 30min à 200°C CEI851-7) | 160°C | 170°C |
| Glissement torsade (CEI60851-3-B5) | 21N | 50N |

**Tableau 3**

| | Exemple 4 | Exemple 5 | Vernis standard A | Exemple 6 | Vernis standard B |
|---|---|---|---|---|---|
| Nombre d'atomes de carbone par chaîne aliphatique | 28 | 28 | - | 28 | - |
| Surépaisseur d'émail (µm) | 60 | 61 | 59 | 60 | 59 |
| Flexibilité 1 xD | 20% | 20% | 20% | 25% | 25% |
| Choc Thermique à 200°C, 30min | 15% | 15% | 15% | 15% | 15% |
| Résistance à l'abrasion | 450 | 480 | 500 | 520 | 550 |
| Soudabilité à 475°C | 4s | 3,5s | 4s | - | - |
| Tangente Delta (Dansk TD300) | 181°C | 179°C | 182°C | 192°C | 195°C |
| Glissement torsade (CEI60851-3-B5) | 10N | 11N | > 60N | 11N | > 60N |

**Tableau 4**

| | Exemple 7 | Exemple 8 | Vernis standard C |
|---|---|---|---|
| Nombre d'atomes de carbone par chaîne aliphatique | 28 | 28 | - |
| Surépaisseur d'émail (µm) | 50 | 52 | 52 |
| Flexibilité 1xD | 20% | 20% | 20% |
| Choc Thermique à 175°C, 30min | 15% | 15% | 15% |
| Résistance à l'abrasion | 380 | 350 | 415 |
| Soudabilité à 390°C | 2s | 2s | 2,5s |
| Tangente Delta (Dansk TD300) | 162°C | 164°C | 165°C |
| Glissement torsade (CE160851-3-B5) | 9N | 7N | > 60N >60N (rupture du fil) |

## Revendications

1. Procédé de fabrication d'un diisocyanate modifié sur lequel est fixée une chaîne pendante aliphatique comportant au moins 15 atomes de carbone, ledit diisocyanate modifié étant obtenu par la réaction entre un groupement fonctionnel isocyanate d'un triisocyanate et un groupement fonctionnel terminal d'une chaîne aliphatique, et ladite fabrication du diisocyanate modifié étant réalisée en milieu solvant, agité et chauffé.

2. Procédé de fabrication d'un diisocyanate modifié selon la revendication 1 **caractérisé en ce que** ledit groupement fonctionnel terminal est choisi parmi les alcools, les anhydrides, les acides carboxyliques et les amines.

3. Procédé de fabrication d'un vernis d'émaillage autolubrifiant comportant un polymère modifié comprenant un polymère dit de base sur lequel est fixée une chaîne aliphatique pendante comportant au moins 15 atomes de carbone **caractérisé en ce qu'**il comporte les étapes suivantes:
- la fabrication d'un diisocyanate modifié selon l'une des revendications 1 ou 2,
- le mélange dudit diisocyanate modifié avec au moins un monomère difonctionnalisé comportant deux deuxièmes groupements fonctionnels réactifs avec les premiers groupements fonctionnels isocyanates du diisocyante modifié pour réaliser ladite synthèse dudit polymère modifié.

4. Procédé de fabrication d'un vernis d'émaillage autolubrifiant selon la revendication 3 **caractérisé en ce que** ledit polymère de base est un polyamide-imide.

5. Procédé de fabrication d'un vernis d'émaillage autolubrifiant selon la revendication 3 **caractérisé en ce que** ledit polymère de base est choisi parmi les polyuréthanes, les polyamides, les polyesters, les polyesters-imides, les polyesters-imides étamables, les polyesters amides-imides, les polyimides, les composés polyépoxydes et les composés polyphénoxydes.

6. Procédé de fabrication d'un vernis d'émaillage autolubrifiant selon la revendication 3 **caractérisé en ce que** ledit polymère de base est un polyamide semi aromatique et **en ce que** le groupement, dit de fixation, fixant le polymère de base et ladite chaîne aliphatique pendante est un uréthane ou un amide de sorte que ledit vernis d'émaillage autolubrifiant est thermoadhérent.

7. Procédé de fabrication d'un vernis d'émaillage autolubrifiant selon la revendication 3 **caractérisé en ce que**, ledit polymère de base étant un polyuréthane, le procédé comporte en outre une étape de mélange du polyuréthane modifié avec un polymère choisi parmi un polyester-imide étamable et un polyester-imide étamable modifié.

8. Procédé de fabrication d'un vernis d'émaillage autolubrifiant selon l'une des revendications 3 à 7 **caractérisé en ce qu'**un monomère difonctionalisé comprenant deux groupements fonctionnels semblables aux groupements fonctionnels isocyanates du diisocyanate modifié est mélangé audit diisocyanate modifié.

9. Procédé de fabrication d'un conducteur électrique émaillé (1) **caractérisé en qu'**il comporte les étapes suivantes :
- une étape de fabrication du vernis d'émaillage autolubrifiant (4) selon l'une des revendications 3 à 8,
- une étape de revêtement d'un conducteur électrique avec une couche du vernis d'émaillage autolubrifiant.

## Claims

1. Method of producing a modified diisocyanate to which is fixed an aliphatic pendant chain comprising at least 15 carbon atoms, said modified diisocyanate being obtained by the reaction between an isocyanate functional group of a triisocyanate and a terminal functional group of an aliphatic chain, and said production of the modified diisocyanate being done in a shaken and heated solvent environment.

2. Method of producing a modified diisocyanate according to claim 1 **characterized in that** said terminal functional group is chosen among alcohols, anhydrides, carboxylic acids and amines.

3. Method of producing a self-lubricating enameling varnish comprising a modified polymer comprising a base polymer to which is fixed an aliphatic pendant chain comprising at least 15 carbon atoms **characterized in that** it comprises the following steps:
- the production of a modified diisocyanate according to one of claims 1 or 2,
- the mixture of said modified diisocyanate with at least one difunctionalized monomer comprising two second reactive functional groups with the first isocyanate functional groups of the modified diisocyanate to achieve said synthesis of the modified polymer.

4. Method of producing a self-lubricating enameling varnish according to claim 3 **characterized in that** said base polymer is a polyamide-imide.

5. Method for producing a self-lubricating enameling varnish according to claim 3 **characterized in that** said base polymer is chosen among polyurethanes, polyamides, polyesters, polyester-imides, platable polyester-imides, polyester amide-imides, polyamides, polyepoxide compounds and polyphenoxide compounds.

6. Method of producing a self-lubricating enameling varnish according to claim 3 **characterized in that** said base polymer is a semi-aromatic polyamide and **in that** the group, called the fixing group, fixing the base polymer and said aliphatic pendant chain is a urethane or an amide such that said self-lubricating enameling varnish is thermoadhesive.

7. Method of producing a self-lubricating enameling varnish according to claim 3 **characterized in that** said base polymer being a polyurethane, the method furthermore includes a step for mixing the modified polyurethane with a polymer chosen among a platable polyester-imide and a modified platable polyester-imide.

8. Method for producing a self-lubricating enameling varnish according to one of claims 3 to 7 **characterized in that** a difunctionalized monomer comprising two functional groups similar to the isocyanate functional groups of the modified diisocyanate is mixed with said modified diisocyanate.

9. Method for producing an enameled electric conductor (1) **characterized in that** it comprises the following steps:
- a step for producing the self-lubricating enameling varnish (4) according to one of claims 3 to 8,
a step for covering an electrical conductor with a layer of self-lubricating enameling varnish.

## Patentansprüche

1. Verfahren zur Herstellung eines modifizierten Diisocyanats, auf dem eine aliphatische hängende Kette gebunden ist, mindestens 15 Kohlenstoffatome umfassend, wobei das besagte modifizierte Diisocyanat durch die Reaktion zwischen einer funktionellen Isocyanatgruppe eines Triisocyanats und einer terminalen funktionellen Gruppe einer aliphatischen Kette dargestellt wird, und wobei die besagte Herstellung des modifizierten Diisocyanats in einem bewegten und erhitzten Lösungsmittel durchgeführt wird.

2. Verfahren zur Herstellung eines modifizierten Diisocyanats nach Anspruch 1, **dadurch gekennzeichnet, dass** die besagte terminale funktionelle Gruppe ausgewählt ist aus den Alkoholen, den Anhydriden, den Carboxylsäuren und den Aminen.

3. Verfahren zur Herstellung eines selbstschmierenden Emaillacks, ein modifiziertes Polymer umfassend, ein so genanntes Basispolymer aufweisend, auf dem eine hängende aliphatische Kette gebunden ist, mindestens 15 Kohlenstoffatome umfassend, **dadurch gekennzeichnet, dass** es die folgenden Schritte umfasst:
- die Herstellung eines modifizierten Diisocyanats nach einem der Ansprüche 1 oder 2,
- das Mischen des besagten modifizierten Diisocyanats mit mindestens einem difunktionalisiertem Monomer, zwei mit den ersten funktionellen Isocyanatgruppen des modifizierten Diisocyanats reaktive zweite funktionelle Gruppen umfassend, um die Synthese des besagten modifizierten Polymers durchzuführen.

4. Verfahren zur Herstellung eines selbstschmierenden Emaillacks nach Anspruch 3, **dadurch gekennzeichnet, dass** das besagte Basispolymer ein Polyamidimid ist.

5. Verfahren zur Herstellung eines selbstschmierenden Emaillacks nach Anspruch 3, **dadurch gekennzeichnet, dass** das besagte Basispolymer ausgewählt ist aus den Polyurethanen, den Polyamiden, den Polyestern, den Polyesterimiden, den verzinnbaren Polyesterimiden, den Polyesteramidimiden, den Polyimiden, den Polyepoxid- und den Polyphenoxidverbindungen.

6. Verfahren zur Herstellung eines selbstschmierenden Emaillacks nach Anspruch 3, **dadurch gekennzeichnet, dass** das besagte Basispolymer ein halbaromatisches Polyamid ist und **dadurch**, dass die Bindungsgruppe genannte Gruppe, die das Basispolymer und die besagte hängende aliphatische Kette bindet, ein Urethan oder ein Amid ist, so dass der besagte selbstschmierende Emaillack thermohaftend ist.

7. Verfahren zur Herstellung eines selbstschmierenden Emaillacks nach Anspruch 3, **dadurch gekennzeichnet, dass**, wobei das besagte Basispolymer ein Polyurethan ist, das Verfahren weiterhin einen Schritt des Mischens des modifizierten Polyurethans mit einem Polymer umfasst, das ausgewählt ist aus einem verzinnbaren Polyesterimid und einem modifizierten verzinnbaren Polyesterimid.

8. Verfahren zur Herstellung eines selbstschmierenden Emaillacks nach einem der Ansprüche 3 bis 7, **dadurch gekennzeichnet, dass** ein difunktionalisiertes Monomer, das zwei funktionelle Gruppen umfasst, die den funktionellen Isocyanatgruppen des modifizierten Diisocyanats ähnlich sind, mit dem besagten modifizierten Diisocyanat gemischt wird.

9. Verfahren zur Herstellung eines emaillierten elektrischen Leiters (1), **dadurch gekennzeichnet, dass** es die folgenden Schritte umfasst:
- einen Schritt der Herstellung des selbstschmierenden Emaillacks (4) nach einem der Ansprüche 3 bis 8,
- einen Schritt der Beschichtung eines elektrischen Leiters mit einer Schicht des selbstschmierenden Emaillacks.
